# EUROPÄISCHE PATENTSCHRIFT

(11) **EP 2 706 859 B1**
(45) Veröffentlichungstag und Bekanntmachung des Hinweises auf die Patenterteilung: **21.08.2019**
(21) Anmeldenummer: 12718997.5
(22) Anmeldetag: 04.05.2012
(51) Int. Cl.: A21B 3/07, A21B 5/02, A21B 3/18, A21B 1/46

(54) **BACKOFEN MIT PRODUKTABNAHMEVORRICHTUNG**
OVEN COMPRISING A PRODUCT REMOVAL DEVICE
FOUR MUNI D'UN DISPOSITIF D'ENLÈVEMENT DE PRODUIT

(30) Priorität: 11.05.2011 AT 6712011
(43) Veröffentlichungstag der Anmeldung: 19.03.2014
(73) Patentinhaber: Haas Food Equipment GmbH, 1210 Wien (AT)
(72) Erfinder: HAAS, Johannes, A-1040 Wien (AT); HAAS, Josef, A-2100 Leobendorf (AT); JIRASCHEK, Stefan, A-2202 Königsbrunn (AT); OBERMAIER, Fritz, A-3500 Krems (AT)
(74) Vertreter: Puchberger & Partner Patentanwälte
(86) Internationale Anmeldenummer: PCT/EP2012/058212
(87) Internationale Veröffentlichungsnummer: WO 2012/152678

(56) Entgegenhaltungen:
- AT-A1- 506 418
- DE-A1- 3 529 770
- DE-U1-202005 013 663
- US-A- 3 279 634
- US-A- 3 279 634
- US-A- 4 025 267

## Beschreibung

Die Erfindung bezieht sich auf Backöfen mit einer im Backofen umlaufenden, endlosen Backzangenkette, die in ihren auf- und zuklappbaren Backzangen aus Backformoberteilen und Backformunterteilen bestehende Backformen enthält, in denen durch einen Backprozess hergestellte, gebackene Produkte entstehen.

Die Backöfen besitzen jeweils einen vorderen Ofenteil, einen hinteren Ofenteil, ein mit einer äußeren Wärmeisolierung versehenes Ofengestell, einen innerhalb der Wärmeisolierung angeordneten Backraum und eine im Backofen kontinuierlich umlaufende und sich durch den Backraum bewegende, endlose Backzangenkette. Die Backzangenkette ist im Backofen längs einer in sich geschlossenen Umlaufbahn angeordnet, die sich in zwei übereinander angeordneten Transportebenen durch beide Ofenteile erstreckt. Die Backzangenkette enthält auf- und zuklappbare Backzangen, in denen aus Backformoberteilen und Backformunterteilen bestehende Backformen angeordnet sind, die durch Aufklappen der Backzangen geöffnet und durch Zuklappen der Backzangen geschlossen werden. Im vorderen Ofenteil des Backofens sind entlang der oberen Transportebene eine Einrichtung zum Aufklappen der Backzangen, eine Ausgabestation, eine Beschickungsstation und eine Einrichtung zum Zuklappen der Backzangen in Laufrichtung der Backzangen hintereinander angeordnet. In der Ausgabestation ist eine die gebackenen Produkte aus den aufgeklappten Backzangen entnehmende Produktabnahmevorrichtung angeordnet, der eine obere Transporteinrichtung für die entnommenen, gebackenen Produkte nachgeordnet ist.

In diesen Backöfen werden fließfähige Backzubereitungen verarbeitet und durch einen Backprozess in gebackene Produkte verwandelt.

Die Backzubereitungen werden in einem Mischer hergestellt. Im Mischer werden die flüssigen Zutaten der Backzubereitung und die festen bzw. pulverförmigen Zutaten der Backzubereitung miteinander vermischt. Dabei entsteht eine formlose Masse. Die formlose Masse ist fließfähig. Sie besitzt eine flüssige, d. h. dünnflüssige bis dickflüssige, und manchmal auch breiige Konsistenz. Die flüssigen Zutaten sind hauptsächlich Wasser mit einem Anteil von 42,0 bis 60,0 Gew.-% an der Backzubereitung. Die pulverförmigen Zutaten sind hauptsächlich eine stärkehaltige Hauptkomponente mit einem Anteil von 36,0 bis 56,5 Gew.-% an der Backzubereitung. Als stärkehaltige Hauptkomponente wird zumeist Weizenmehl verwendet. Die stärkehaltige Hauptkomponente kann auch ein Stärkemehl sein, oder eine Mischung aus Weizenmehl und Stärkemehl, oder eine Mischung von verschiedenen Getreide- bzw. Stärkemehlen.

Die aus solchen Backzubereitungen hergestellten, gebackenen Produkte können essbare Backprodukte sein, wie z. B. Oblaten, Waffeln, Weichwaffeln, Pfannkuchen etc.

Die aus solchen Backzubereitungen hergestellten, gebackenen Produkte können aber auch andere, an sich nicht für den Verzehr vorgesehene Produkte sein. Zu diesen Produkten gehören z. B. Verpackungsartikel, wie z. B. aus einer stärkehaltigen Backzubereitung hergestellte Verpackungstassen, oder aus einer stärkehaltigen Backzubereitung hergestellte Teile eines Einweg-Essgeschirrs, wie z. B. Teller und Tassen aber auch Messer, Gabeln und Löffeln.

Die Backzubereitungen werden als formlose, flüssige bis breiige Massen einem Backofen zugeführt. Im Backofen wird die formlose Masse mit Hilfe einer Teigpumpe durch Teigleitungen hindurch zur Beschickungsstation befördert. In der Beschickungsstation wird die formlose Masse in Teigportionen geteilt und die Teigportionen werden in die geöffneten Backformen eingebracht, die in den aufgeklappten Backzangen angeordnet sind, die in der oberen Transportebene des Backofens die Beschickungsstation passieren. Nach dem Einbringen der Teigportionen werden die Backzangen zugeklappt. Beim Zuklappen der Backzangen werden die Backformen geschlossen und die Teigportionen werden in den geschlossenen Backformen eingeschlossen. Die umlaufende Backzangenkette befördert die zugeklappten Backzangen durch den Backraum in den hinteren Ofenteil und durch den Backraum. Während die Backzangen den Backraum passieren, werden die Backzangen samt den Backformen beheizt und dabei auf Backtemperaturen zwischen 150 °C (Grad Celsius) und 250 °C (Grad Celsius) aufgeheizt. In den zugeklappten Backzangen werden die in den Backformen eingeschlossenen Teigportionen einem Backprozess unterworfen und in den geschlossenen Backformen drucklos ausgebacken. Durch den Backprozess entsteht in jeder Backform ein gebackenes Produkt, das in der zugeklappten Backzange verbleibt. Die umlaufende Backzangenkette befördert die zugeklappten Backzangen im vorderen Ofenteil in die obere Transportebene. Beim Passieren der oberen Transportebene werden die Backzangen aufgeklappt und im aufgeklappten Zustand durch die Ausgabestation hindurch zur Eingabestation befördert. In der Ausgabestation werden die gebackenen Produkte im heißen Zustand aus den geöffneten Backformen entnommen, die in den aufgeklappten Backzangen angeordnet sind. Die gebackenen Produkte werden im heißen Zustand aus dem Backofen ausgegeben. Die umlaufende Backzangenkette befördert die aufgeklappten Backzangen mit den geöffneten leeren Backformen zur Beschickungsstation. In der Beschickungsstation werden neuerlich aus der formlosen Masse gebildete Teigportionen in die geöffneten Backformen eingebracht.

Backöfen, bei denen die aus Backformoberteilen und Backformunterteilen bestehenden Backformen in den auf- und zuklappbaren Backzangen einer im Backofen umlaufenden und sich durch den Backraum bewegenden, endlosen Backzangenkette angeordnet sind, sind z. B. aus den Dokumenten AT 506 418 A1, WO 2009/100873 A2, US 2009/200291 A1 und DE 20 2005 013663 U1 bekannt.

Produktabnahmevorrichtungen sind beispielsweise aus der US 4,025,267 A und der US 3,279,634 A bekannt.

Die US 4,025,267 A zeigt eine kontinuierliche Formmaschine. Nachteilig an dieser Vorrichtung
ist aber, dass die gezeigte Abnahmevorrichtung bei der Abnahme von plattenförmigen Backprodukten diese deformieren und zerbrechen würde.

Aus der US 3,279,634 A ist eine Transfervorrichtung bekannt. Nachteilig an dieser Transfervorrichtung ist aber, dass diese nur für die Entnahme von einzelnen Produkten eingerichtet ist.

Aufgabe der Erfindung ist es, einen Backofen der eingangs genannten Art zu verbessern.

Gemäß der Erfindung wird ein neuer Backofen vorgeschlagen. Der neue Backofen besitzt einen vorderen Ofenteil, einen hinteren Ofenteil, ein mit einer äußeren Wärmeisolierung versehenes Ofengestell, einen innerhalb der Wärmeisolierung angeordneten Backraum und eine im Backofen kontinu ierlich umlaufende und sich durch den Backraum bewegende, endlose Backzangenkette. Die Backzangenkette ist im Backofen längs einer in sich geschlossenen Umlaufbahn angeordnet, die sich in zwei übereinander angeordneten Transportebenen durch beide Ofenteile erstreckt. Die Backzangenkette enthält auf- und zuklappbare Backzangen, in denen aus Backformoberteilen und Backformunterteilen bestehende Backformen angeordnet sind, die durch Aufklappen der Backzangen geöffnet und durch Zuklappen der Backzangen geschlossen werden. Im vorderen Ofenteil des Backofens sind entlang der oberen Transportebene eine Einrichtung zum Aufklappen der Backzangen, eine Ausgabestation, eine Beschickungsstation und eine Einrichtung zum Zuklappen der Backzangen in Laufrichtung der Backzangen hintereinander angeordnet. In der Ausgabestation ist eine die gebackenen Produkte aus den aufgeklappten Backzangen entnehmende Produktabnahmevorrichtung angeordnet, der eine obere Transporteinrichtung für die entnommenen, gebackenen Produkte nachgeordnet ist.

Der neue Backofen ist erfindungsgemäß dadurch gekennzeichnet, dass die Produktabnahmevorrichtung ein liegend angeordnetes und um eine horizontale Drehachse drehbares Drehgestell besitzt, das in die aufgeklappten Backzangen hineinragt, dass das Drehgestell entlang seinem äußeren Umfang angeordnete Abnahmeelemente trägt, die am äußeren Umfang des Drehgestells in zumindest einer sich entlang dem Umfang des Drehgestells erstreckenden Längsreihe hintereinander angeordnet sind, und dass die Abnahmeelemente als mit einer Unterdruckquelle verbundene Saugelemente ausgebildet sind.

Bei diesem Backofen kann erfindungsgemäß weiters vorgesehen sein, dass das liegend angeordnete Drehgestell im vorderen Ofenteil höhenverstellbar angeordnet ist. Weiters kann das liegend angeordnete Drehgestell an seinen äußeren Umfang nach außen vorstehende Antriebsnasen besitzen, die bei der umlaufenden Backzangenkette in die zwischen den Backzangen angeordneten Zwischenräume der Backzangenkette eingreifen.

Beim erfindungsgemäßen Backofen werden die in den zugeklappten Backzangen entstandenen, gebackenen Produkte an der Ausgabestation des Backofens aus den umlaufenden, aufgeklappten Backzangen entnommen. Die gebackenen Produkte liegen in den aufgeklappten Backzangen auf den in den Zangenunterteilen der Backzangen angeordneten Backformunterteilen der geöffnete Backformen.

Die Entnahme geschieht durch die Produktabnahmevorrichtung bzw. durch das liegend angeordnete, rotierende Drehgestell der Produktabnahmevorrichtung. Das liegend angeordnete Drehgestell rotiert um seine horizontal angeordnete Mittelachse und entnimmt die gebackenen Produkte aus den aufgeklappten Backzangen, ohne die gebackenen Produkte zu deformieren.

Das rotierende Drehgestell erfasst mit seinen Abnahmeelementen die auf den Backformunterteilen liegenden Produktstücke. Die Abnahmeelemente des Drehgestells sind als Saugelemente ausgebildet, die mit einer Unterdruckquelle verbunden sind. Der von einer Unterdruckquelle erzeugte Unterdruck wirkt über die als Saugelemente ausgebildeten Abnahmeelemente des Drehgestells direkt auf die auf den Backformunterteilen liegenden Produktstücke ein. Die Produktstücke werden einzeln erfasst. Jedes Produktstück wird durch zumindest ein Saugelement erfasst und am Drehgestell festgehalten. Das Produktstück wird durch die Drehbewegung des Drehgestelles aus der aufgeklappten Backzange entnommen und durch die Drehbewegung des Drehgestelles zur oberen Transporteinrichtung befördert. Das Erfassen des Produktstückes erfolgt über den am Saugelement angelegten Unterdruck. Bei der Übergabe des Produktstückes an die obere Transporteinrichtung wird der über das Saugelement auf das Produktstück einwirkende Unterdruck unterbrochen.

Erfindungsgemäß kann das liegend angeordnete Drehgestell im vorderen Ofenteil höhenverstellbar angeordnet sein. Diese Ausbildung erlaubt es, die Position der horizontalen Drehachse des Drehgestells innerhalb des Ofengestells zu verändern. Dadurch kann an der Unterseite des Drehgestells der Abstand zwischen den am Umfang des rotierenden Drehgestells angeordneten Abnahmeelementen und den horizontal angeordneten Zangenunterteilen der aufgeklappten Backzangen eingestellt bzw. verändert werden.

Die höhenverstellbare Anordnung des Drehgestells erlaubt es, die Höhenposition des Drehgestells auf die Oberseiten der gebackenen Produkte einzustellen, die in den aufgeklappten Backzangen auf den in den Zangenunterteilen der Backzangen angeordneten Backformunterteilen liegen.

Erfindungsgemäß besitzt das liegend angeordnete Drehgestell an seinem äußeren Umfang nach außen vorstehende Antriebsnasen, die bei der umlaufenden Backzangenkette in die zwischen den Backzangen angeordneten Zwischenräume der Backzangenkette eingreifen. Diese Ausbildung sieht ein direktes Antreiben des liegend angeordneten Drehgestells durch die im Backofen umlaufende Backzangenkette vor, die vom Hauptantrieb des Backofens angetrieben und in Bewegung gesetzt wird.

Gemäß einem weiteren Merkmal der Erfindung ist vorgesehen, dass das Drehgestell zumindest zwei Produkttragarme besitzt, die entlang dem Umfang des Drehgestells im Abstand von einander angeordnet sind, und dass jeder Produkttragarm zumindest ein als Saugelement ausgebildetes Abnahmeelement trägt.

Das Drehgestell ist mit seinen Produkttragarmen den gebackenen Produktstücken zugeordnet, die in den Zangenunterteilen der aufgeklappten Backzangen angeordnet sind, die nacheinander die Ausgabestation des Backofens passieren. Jeder Produkttragarm ist einem Produktstück zugeordnet. Der Produkttragarm erfasst das Produktstück mit seinem als Saugelement ausgebildeten Abnahmeelement. Das Produktstück wird durch die Drehbewegung des Drehgestells aus der aufgeklappten Backzange entnommen und zur oberen Transporteinrichtung befördert.

Das Drehgestell kann in Drehrichtung hintereinander angeordnete Produkttragarme besitzen, die den im Zangenunterteil einer aufgeklappten Backzange hintereinander angeordneten Produktstücken zugeordnet sind.

Gemäß einem weiteren Merkmal der Erfindung kann vorgesehen sein, dass der Produkttragarm zumindest einen Stab besitzt, der zumindest zwei als Saugelement ausgebildete Abnahmeelemente trägt, die längs dem Stab im Abstand von einander angeordnet sind. Bei dieser Ausbildung wird jedes Produktstück durch zwei oder mehrere, als Saugelement ausgebildete Abnahmeelemente eines Produkttragarmes erfasst und am Drehgestell durch Unterdruck festgehalten. Das Produktstück liegt am Produkttragarm an und wird durch die Drehbewegung des Drehgestells aus der aufgeklappten Backzange entnommen.

Gemäß einem weiteren Merkmal der Erfindung kann vorgesehen sein, dass der Produkttragarm zumindest einen parallel zur Drehachse des Drehgestells angeordneten Längsstab besitzt, der zumindest ein als Saugelement ausgebildetes Abnahmeelement trägt. Bei dieser Ausbildung sind die entlang dem Umfang des Drehgestells im Abstand von einander angeordneten Produkttragarme parallel zur Drehachse des Drehgestells ausgerichtet.

Gemäß einem weiteren Merkmal der Erfindung kann der zur Drehachse des Drehgestells parallele Längsstab des Produkttragarmes zumindest zwei als Saugelement ausgebildete Abnahmeelemente tragen, die längs dem Längsstab im Abstand von einander angeordnet sind.

Diese Ausbildung des Drehgestells erlaubt es, ein einzelnes breites Produktstück oder zwei nebeneinander angeordnete Produktstücke mit einem einzelnen Produkttragarm aus einem Zangenunterteil einer aufgeklappten Backzange zu entnehmen.

Gemäß einem weiteren Merkmal der Erfindung kann vorgesehen sein, dass der Produkttragarm zumindest zwei, parallel zur Drehachse des Drehgestells angeordnete Längsstäbe besitzt, die in einer zur Drehachse des Drehgestells parallelen Referenzebene angeordnet sind, und dass die Längsstäbe als Saugelement ausgebildete Abnahmeelemente tragen, die senkrecht zur Referenzebene angeordnet sind.

Diese Ausbildung des Drehgestells ist für die Manipulation von plattenförmigen Produktstücken von Vorteil, die von den beiden Längsstäben des Produkttragarmes jeweils nahe dem vorderen bzw. hinteren Rand des Produktstückes erfasst werden. Der Produkttragarm kann auch drei oder mehr Längsstäbe besitzen, die jeweils mehrere, als Saugelement ausgebildete Abnahmeelemente tragen, die längs dem jeweiligen Längsstab im Abstand von einander angeordnet und jeweils senkrecht zu der von den Längsstäben gebildeten Referenzebene angeordnet sind.

Gemäß einem weiteren Merkmal der Erfindung kann vorgesehen sein, dass der Produkttragarm einen parallel zur Drehachse des Drehgestells angeordneten Längsstab besitzt, der zumindest einen quer zum Längsstab angeordneten Querstab trägt, der in einer zur Drehachse des Drehgestells parallelen Referenzebene angeordnet ist, und dass der Querstab zwei oder mehrere als Saugelement ausgebildete Abnahmeelement trägt, die längs dem Querstab im Abstand von einander angeordnet sind und jeweils senkrecht zur Referenzebene angeordnet sind.

Diese Ausbildung ist bei der Manipulation von breiten Produktstücken von Vorteil. Diese werden jeweils an zwei oder mehreren Stellen vom Produkttragarm erfasst und die als Saugelement ausgebildeten Abnahmeelemente am Querstab des Produkttragarmes festgehalten.

Gemäß einem weiteren Merkmal der Erfindung kann bei einem mit einem Längsstab versehenen Produkttragarm des Drehgestells vorgesehen sein, dass der Längsstab zwei oder mehrere im Abstand von einander angeordnete Querstäbe trägt, die in einer zur Drehachse des Drehgestells parallelen Referenzebene angeordnet sind, und dass jeder Querstab zumindest zwei als Saugelement ausgebildete Abnahmeelemente trägt, die längs dem Querstab im Abstand von einander angeordnet sind und jeweils senkrecht zur Referenzebene angeordnet sind.

Diese Ausbildung ist bei der Manipulation von großen, plattenförmigen Produktstücken von Vorteil. Der Produkttragarm erfasst jedes Produktstück an mehreren Stellen gleichzeitig. Die als Saugelement ausgebildeten, mit Unterdruck beaufschlagten Abnahmeelemente halten das Produktstück an den Querstäben des Produkttragarmes fest. Das am Produkttragarm festgehaltene Produktstück wird durch die Drehbewegung des Drehgestells aus der aufgeklappten Backzange entnommen.

Gemäß einem weiteren Merkmal der Erfindung kann bei einem Produkttragarm des Drehgestells vorgesehen sein, dass der Produkttragarm zumindest zwei, zur Drehachse des Drehgestells parallel angeordnete Längsstäbe besitzt, die in einer zur Drehachse des Drehgestells parallelen Referenzebene angeordnet sind, und dass der Produkttragarm zumindest zwei quer zu den Längsstäben angeordnete Querstäbe besitzt, die jeweils zumindest zwei als Saugelement ausgebildete Abnahmeelemente tragen, die längs dem Querstab im Abstand von einander angeordnet sind und jeweils senkrecht zur Referenzebene angeordnet sind.

Diese Ausbildung ist bei der Manipulation von großflächigen, plattenförmigen Produktstücken von Vorteil. Für die Manipulation von sehr großen, plattenförmigen Produktstücken können an den Längsstäben Produkttragarmes auch drei, vier, fünf oder noch mehr im Abstand von einander angeordnete Querstäbe angebracht sein, die jeweils parallel zur Referenzebene angeordnet sind. Jeder Querstab kann drei, vier, fünf oder noch mehr im Abstand von einander angeordnete als Saugelement ausgebildete Abnahmeelemente tragen, die jeweils senkrecht zu der zu den Querstäben parallelen Referenzebene ausgerichtet sind. Das durch diesen Produkttragarm erfasste Produktstück liegt an den Querstäben des Produkttragarmes an. Der über die an den Querstäben angebrachten, als Saugelement ausgebildeten Abnahmeelemente auf das Produktstück einwirkende Unterdruck hält das Produktstück am Produkttragarm fest. Das Produktstück wird durch die Drehbewegung des Drehgestells aus der aufgeklappten Backzange entnommen.

Gemäß einem weiteren Merkmal der Erfindung kann vorgesehen sein, dass die Produkttragarme als Hohlprofile ausgebildet sind und einen Teil der Saugleitungen bilden, die von den an den Produkttragarmen angebrachten, als Saugelement ausgebildeten Abnahmeelementen zu einer Unterdruckquelle führen. Bei dieser Ausbildung des Drehgestells verlaufen die Saugleitungen, die von den als Saugelement ausgebildeten Abnahmeelementen zur Unterdruckquelle führen, in Inneren der hohlen Stäbe der Produkttragarme.

Gemäß einem weiteren Merkmal der Erfindung kann vorgesehen sein, dass die am Umfang des Drehgestells angeordneten Abnahmeelemente als, vorzugsweise jeweils mit einem elastischen Balg versehene Saugnäpfe ausgebildet sind, die an den Produkttragarmen angebracht und über Saugleitungen mit einer Unterdruckquelle verbunden sind.

Gemäß einem weiteren Merkmal der Erfindung kann vorgesehen sein, dass die am Umfang des Drehgestells angeordneten Abnahmeelemente als elastisch in sich zusammenschiebbare Saughülsen ausgebildet sind, die an den Produkttragarmen angebracht und über Saugleitungen mit einer Unterdruckquelle verbunden sind.

Gemäß einem weiteren Merkmal der Erfindung kann vorgesehen sein, dass das liegend angeordnete Drehgestell zumindest einen stehend angeordneten Drehstern besitzt, der die am Umfang des Drehgestells angeordneten, als Saugelement ausgebildeten Abnahmeelemente trägt.

Bei dieser Ausbildung des Drehgestells werden die Produktstücke durch den stehend angeordneten Drehstern des rotierenden Drehgestells aus den aufgeklappten Backzangen entnommen. Die am Drehstern angebrachten, als Saugelement ausgebildeten Abnahmeelemente sind jeweils mit Unterdruck beaufschlagt. Die Produktstücke werden von den Abnahmeelementen mittels Unterdruck erfasst und mittels Unterdruck am Drehstern festgehalten. Die Produktstücke werden durch die Drehbewegung des Drehsterns aus den aufgeklappten Backzangen entnommen und zu der dem Drehgestell nachgeordneten, oberen Transporteinrichtung befördert.

Erfindungsgemäß kann das liegend angeordnete Drehgestell zwei oder mehrere mit Abstand nebeneinander angeordnete Drehsterne besitzen, die die am Umfang des Drehgestells angeordneten, als Saugelement ausgebildeten Abnahmeelemente tragen.

Bei dieser Ausbildung sind die als Saugelement ausgebildeten Abnahmeelemente des Drehgestells an der Außenseite der Drehsterne angeordnet. Die Abnahmeelemente sind an den Außenseiten der Drehsterne in sich entlang dem Umfang des Drehgestells erstreckenden Längsreihen hintereinander angeordnet. Gleichzeitig sind die Abnahmeelemente in zur Drehachse des Drehgestells parallelen Querreihen angeordnet. Mit den nebeneinander angeordneten Drehsternen können einzelne großflächige Produktstücke oder nebeneinander angeordnete, kleinere Produktstücke aus den aufgeklappten Backzangen entnommen werden.

Gemäß einem weiteren Merkmal der Erfindung kann vorgesehen sein, dass der stehend angeordnete Drehstern einen als Vieleck ausgebildeten Außenkranz besitzt, bei dem die als Saugelement ausgebildeten Abnahmeelemente an den geraden Teilstücken des Außenkranzes angeordnet sind.

Gemäß einem weiteren Merkmal der Erfindung kann vorgesehen sein, dass beim Drehstern an den geraden Teilstücken des Außenkranzes jeweils zumindest zwei als Saugelement ausgebildete Abnahmeelemente im Abstand von einander angeordnet sind.

Gemäß einem weiteren Merkmal der Erfindung kann vorgesehen sein, dass der Drehstern als Hohlkörper ausgebildet ist und einen Teil der Saugleitung bildet, die von den als Saugelement ausgebildeten Abnahmeelementen zu einer Unterdruckquelle führt.

Gemäß einem weiteren Merkmal der Erfindung kann vorgesehen sein, dass die als Saugelement ausgebildeten Abnahmeelemente des Drehgestells als, vorzugsweise jeweils mit einem elastischen Balg versehene Saugnäpfe ausgebildet sind, die am äußeren Umfang eines Drehsterns angebracht und über Saugleitungen mit einer Unterdruckquelle verbunden sind.

Gemäß einem weiteren Merkmal der Erfindung kann vorgesehen sein, dass die als Saugelement ausgebildeten Abnahmeelemente des Drehgestells als, elastisch in sich zusammenschiebbare Saughülsen ausgebildet sind, die am äußeren Umfang eines Drehsterns angebracht und über Saugleitungen mit einer Unterdruckquelle verbunden sind.

Nachstehend wird die Erfindung anhand der Zeichnung näher erläutert. In den Zeichnungen zeigen:
Die Fig. 1 zeigt schematisch einen ersten Backofen von der Seite,
Die Fig. 2 zeigt schematisch einen zweiten Backofen von der Seite,
Die Fig. 3 zeigt schematisch einen dritten Backofen von der Seite,
Die Fig. 4a bis 4c zeigen ein erstes Drehgestell,
Die Fig. 5a bis 5c zeigen ein zweites Drehgestell,
Die Fig. 6a bis 6g zeigen ein drittes Drehgestell,
Die Fig. 7a bis 4d zeigen einen Produkttragarm,
Die Fig. 8a bis 8c zeigen ein weiteres Drehgestell,
Die Fig. 9a bis 9d zeigen ein erstes Abnahmeelement, und
Die Fig. 10a bis 10d zeigen ein zweites Abnahmeelement.

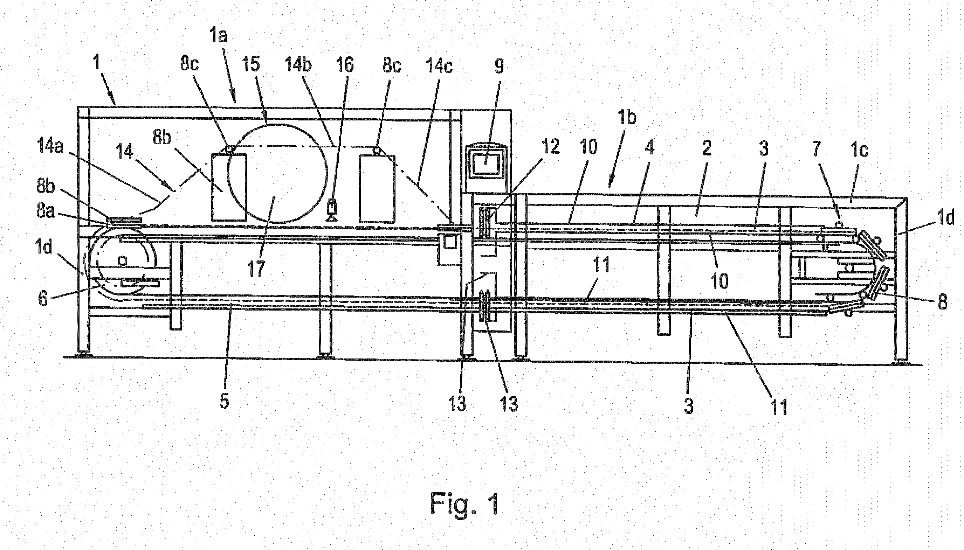

Die Fig. 1 zeigt schematisch einen ersten Backofen 1 von der Seite. Der Backofen 1 besitzt einen vorderen Ofenteil 1a, einen hinteren Ofenteil 1b, ein mit einer äußeren Wärmeisolierung 1c versehenes Ofengestell 1d, ferner einen innerhalb der Wärmeisolierung angeordneten Backraum 2 und eine im Backofen 1 kontinuierlich umlaufende und sich durch den Backraum 2 bewegende, endlose Backzangenkette 3. Die endlose Backzangenkette 3 ist im Backofen 1 längs einer in sich geschlossenen Umlaufbahn angeordnet, die sich in zwei übereinander angeordneten Transportebenen 4 und 5 durch beide Ofenteile 1a und 1b erstreckt. Die Backzangenkette 3 wird durch ein nahe dem vorderen Ende des Backofens 1 angeordnetes Antriebsrad 6 angetrieben und durch das Antriebsrad 6 von der unteren Transportebene 5 nach oben in die obere Transportebene 4 umgelenkt. Die umlaufende Backzangenkette 3 bewegt sich in der oberen Transportebene 4 vom Antriebsrad 6 weg im Backofen 1 nach hinten. Nahe dem hinteren Ende des Backofens 1 passiert die Backzangenkette 3 eine hinteren Backzangenketten-Umlenkvorrichtung 7. An der Umlenkvorrichtung 7 wird die Backzangenkette 3 von der oberen Transportebene 4 nach unten in die untere Transportebene 5 umgelenkt.

Die Backzangenkette 3 enthält auf- und zuklappbare Backzangen 8. Die Backzangen 8 sind in der Backzangenkette 3 hintereinander angeordnet. In den Backzangen 8 sind aus Backformoberteilen und Backformunterteilen bestehende Backformen angeordnet, die durch Aufklappen der Backzangen 8 geöffnet und durch Zuklappen der Backzangen 8 geschlossen werden. Die Backzangen 8 besitzen jeweils einen Zangenunterteil 8a und einen mit diesem schwenkbar verbundenen Zangenoberteil 8b. Am Zangenoberteil 8b ist eine Steuerrolle 8c angebracht, mit deren Hilfe die Backzange 8 aufgeklappt und zugeklappt wird. In den Zangenunterteilen 8a sind ebene Backplatten angeordnet, in denen die Backformunterteile der Backformen enthalten sind. In den Zangenoberteilen 8b sind ebene Backplatten angeordnet, in denen die Backformoberteile der Backformen enthalten sind.

Der Backofen 1 ist mit einer elektrischen Induktionsheizung versehen. Diese sieht einen neben dem vorderen Ofenteil 1a angeordneten Wechselstromgenerator 9 und im Backraum 2 angeordnete, langgestreckte Induktoren 10, 11 vor. Der Wechselstromgenerator 9 ist über Stromleitungen 12, 13 mit den Induktoren 10, 11 verbunden und versorgt diese mit Strom. Die langgestreckten Induktoren 10, 11 sind im Backraum 2 oberhalb und unterhalb der Umlaufbahn der Backzangenkette 3 angeordnet. Die in den Backzangen 8 enthaltenen, ebenen Backplatten sind als Suszeptorplatten ausgebildet, die durch die von den Induktoren 10, 11 erzeugten Magnetfelder berührungsfrei induktiv erwärmt werden.

Im vorderen Ofenteil 1a ist entlang der oberen Transportebene 4 ein Gestänge 14 für den Eingriff mit den Steuerrollen 8c der Backzangen 8 vorgesehen. Das Gestänge 14 sieht drei in Laufrichtung der Backzangen 8 aufeinanderfolgende Abschnitte vor. Das Gestänge 14 sieht einen allmählich ansteigenden Gestängeabschnitt 14a vor, der eine Einrichtung zum Aufklappen der Backzangen 8 darstellt. An den Gestängeabschnitt 14a schließt ein oberer horizontaler Gestängeabschnitt 14b an. Dieser hält die aufgeklappten Backzangen 8 im aufgeklappten Zustand, während sie die Ausgabestation 15 des Backofens 1 und die an diese anschließende Beschickungsstation 16 passieren. An den Gestängeabschnitt 14b schließt ein allmählich abfallender Gestängeabschnitt 14c an, der eine Einrichtung zum Zuklappen der Backzangen 8 darstellt.

In der Ausgabestation 15 ist eine in die aufgeklappten Backzangen 8 hineinragende, in Fig. 1 nur schematisch dargestellte, Produktabnahmevorrichtung 17 vorgesehen. Die Produktabnahmevorrichtung 17 nimmt die gebackenen Produkte von den Zangenunterteilen 8a der aufgeklappten Backzangen 8 ab und übergibt sie an eine, in Fig. 1 nicht dargestellte, obere Transporteinrichtung, von der die gebackenen Produkte aus dem Backofen 1 hinaus befördert werden.

Beim Betrieb des Backofens 1 wird in der Beschickungsstation 16 eine Backzubereitung in einzelnen Teigportionen in die umlaufenden, aufgeklappten Backzangen 8 eingebracht. Nach dem Verlassen der Beschickungsstation 16 bewegen sich die Backzangen 8 mit ihren Steuerrollen 8c entlang dem allmählich abfallenden Gestängeabschnitt 14c. Dabei werden die Zangenoberteile 8b nach unten zu den Zangenunterteilen 8a geklappt und die Backzangen 8 zugeklappt. Beim Zuklappen der Backzangen 8 werden die in den Backzangen 8 enthaltenen Backformen geschlossen und die Teigportionen in den geschlossenen Backformen eingeschlossen. Die zugeklappten Backzangen 8 werden von der umlaufenden Backzangenkette 3 durch den Backraum 2 befördert. Im Backraum 2 werden die Backformen berührungsfrei induktiv erwärmt und die in den Backformen eingeschlossenen Teigportionen werden gebacken. Die zugeklappten Backzangen 8 werden mit den in ihnen enthaltenen, gebackenen Teigportionen von der umlaufenden Backzangenkette 3 in der unteren Transportebene 5 im Backofen 1 nach vorne zum Antriebsrad 6 befördert. Die Backzangen 8 werden entlang dem Antriebsrad 6 in die obere Transportebene 4 befördert. In der oberen Transportebene 4 bewegen sich die Backzangen 8 mit ihren Steuerrollen 8c entlang dem allmählich ansteigenden Gestängeabschnitt 14a. Dabei werden die Backzangen 8 aufgeklappt und die Zangenoberteile 8b hochgeklappt. Die gebackenen Teigportionen bzw. die gebackenen Produkte verbleiben in den Zangenunterteilen 8a der aufgeklappten Backzangen 8. Die gebackenen Produkte werden in der Ausgabestation 15 durch die Produktabnahmevorrichtung 17 von den Zangenunterteilen 8a der aufgeklappten Backzangen 8 abgenommen.

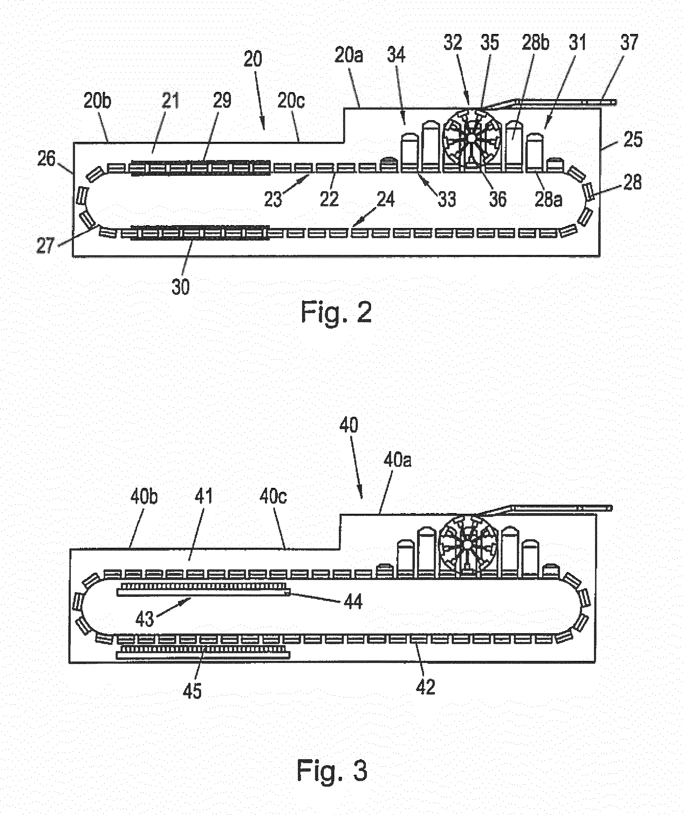

Die Fig. 2 zeigt schematisch einen zweiten Backofen 20 von der Seite. Der Backofen 20 besitzt einen vorderen Ofenteil 20a, einen hinteren Ofenteil 20b, ein mit einer äußeren Wärmeisolierung 20c versehenes Ofengestell, einen innerhalb der Wärmeisolierung 20c angeordneten Backraum 21 und eine im Backofen 20 kontinuierlich umlaufende und sich durch den Backraum 21 bewegende, endlose Backzangenkette 22. Die Backzangenkette 22 ist im Backofen 20 längs einer in sich geschlossenen Umlaufbahn angeordnet, die sich in zwei übereinander angeordneten Transportebenen 23 und 24 durch beide Ofenteile 20a und 20b erstreckt. Die Backzangenkette 22 wird durch ein nahe dem vorderen Ende 25 des Backofens 20 angeordnetes, in Fig. 2 nicht dargestelltes Antriebsrad angetrieben und durch das Antriebsrad von der unteren Transportebene 24 nach oben in die obere Transportebene 23 umgelenkt. Die umlaufende Backzangenkette 22 bewegt sich in der oberen Transportebene 23 vom vorderen Ende 25 des Backofens 20 nach hinten zum hinteren Ende 26 des Backofens 20. Die Backzangenkette 22 wird nahe dem hinteren Ende 26 des Backofens 20 durch eine hintere Backzangenketten-Umlenkvorrichtung 27 von der oberen Transportebene 23 nach unten in die untere Transportebene 24 umgelenkt.

Die Backzangenkette 22 enthält auf- und zuklappbare Backzangen 28, in denen aus Backformoberteilen und Backformunterteilen bestehende Backformen angeordnet sind, die durch Aufklappen der Backzangen 28 geöffnet und durch Zuklappen der Backzangen 28 geschlossen werden. Die Backzangen 28 besitzen jeweils einen Zangenunterteil 28a und einen mit diesem schwenkbar verbundenen Zangenoberteil 28b. Am Zangenoberteil 28b ist eine in Fig. 2 nicht dargestellte Steuerrolle angebracht, mit deren Hilfe die Backzange 28 aufgeklappt und zugeklappt wird. In den Zangenunterteilen 28a sind ebene Backplatten angeordnet, in denen die Backformunterteile der Backformen enthalten sind. In den Zangenoberteilen 28b sind ebene Backplatten angeordnet, in denen die Backformoberteile der Backformen enthalten sind.

Im hinteren Ofenteil 20b ist der Backraum 21 angeordnet. Der Backofen 20 ist mit einer elektrischen Induktionsheizung versehen, die in beiden Transportebenen 23 und 24 jeweils oberhalb und unterhalb der Umlaufbahn der Backzangen 28 angeordnete, langgestreckte Induktoren 29, 30 vorsieht.

Im vorderen Ofenteil 20a des Backofens 20 sind entlang der oberen Transportebene 23 eine Einrichtung 31 zum Aufklappen der Backzangen 28, eine Ausgabestation 32, eine Beschickungsstation 33 und eine Einrichtung 34 zum Zuklappen der Backzangen 28 in Laufrichtung der Backzangen 28 hintereinander angeordnet. In der Ausgabestation 32 ist eine Produktabnahmevorrichtung 35 mit einem liegend angeordneten Drehgestell 36 angeordnet. Das Drehgestell 36 rotiert um seine horizontal angeordnete Mittelachse und entnimmt die gebackenen Produkte aus den aufgeklappten Backzangen 28a und befördert sie zu einer oberen Transporteinrichtung 37, die die gebackenen Produkte aus dem Backofen 20 hinaus befördert.

Fig. 3 zeigt schematisch einen dritten Backofen 40 von der Seite. Der Backofen 40 besitzt einen vorderen Ofenteil 40a, einen hinteren Ofenteil 40b, ein mit einer äußeren Wärmeisolierung 40c versehenes Ofengestell, ferner einen im hinteren Ofenteil 40b innerhalb der Wärmeisolierung 40c angeordneten Backraum 41 und eine im Backofen 40 kontinuierlich umlaufende und sich durch den Backraum 41 bewegende, endlose Backzangenkette 42. Der Backofen 40 entspricht in seinem konstruktiven Aufbau dem Backofen 20 der Fig. 2 und unterscheidet sich von diesem nur durch die Backraumheizung, die beim Backofen 40 als Gasheizung 43 ausgebildet ist. Die Gasheizung 43 sieht langgestreckte Gasbrenner 44 und 45 vor, die im Backraum 41 unterhalb der Umlaufbahn der Backzangenkette 42 angeordnet sind.

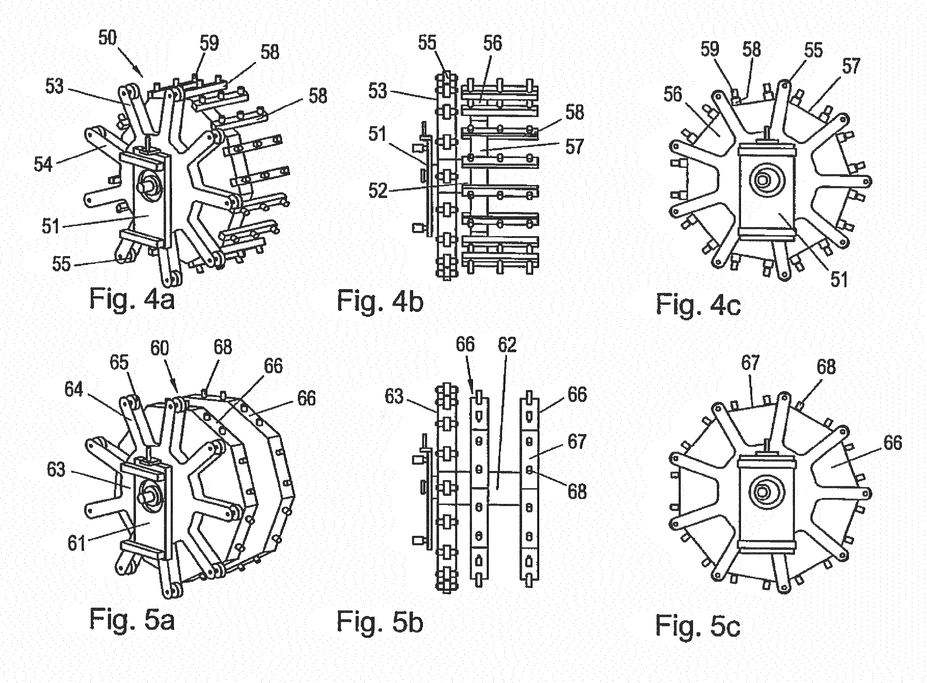

Die Fig. 4a bis 4c zeigen eine erste Ausführungsform des liegend angeordneten Drehgestells der Produktabnahmevorrichtung. Die Fig. 4a zeigt das Drehgestell 50 in einer Schrägansicht von der Rückseite. Die Fig. 4b zeigt das Drehgestell 50 in seiner Arbeitsstellung. Die Fig. 4c zeigt die Rückseite des Drehgestells 50.

Das Drehgestell 50 ist an seiner Rückseite in einer am Ofengestell befestigten Haltevorrichtung 51 drehbar gelagert. Die Haltevorrichtung 51 ist am Ofengestell höhenverstellbar befestigt. Das Drehgestell 50 besitzt eine horizontal angeordnete Hohlwelle 52. Auf der Hohlwelle 52 sitzt der hintere Antriebsstern 53 des Drehgestells 50, der sternförmig angeordnete Arme 54 besitzt, die an ihren Endabschnitten drehbar gelagerte Antriebsrollen 55 tragen, die in die Zwischenräume zwischen den aufeinanderfolgenden Backzangen der umlaufenden Backzangenkette eingreifen.

Am vorderen Ende der Hohlwelle 52 ist ein stehend angeordneter Drehstern 56 befestigt. Der Drehstern 56 ist als Hohlkörper ausgebildet. Der Innenraum des Drehsterns 56 ist mit dem Hohlraum der Hohlwelle 52 verbunden. Der äußere Umfang des Drehsterns 56 ist als Vieleck ausgebildet. An den geraden Teilstücken 57 des Vielecks sind jeweils zwei nebeneinander angeordnete, zur Hohlwelle 52 parallele Längsstäbe 58 befestigt. Die Längsstäbe 58 sind als Hohlprofile ausgebildet und tragen jeweils drei im Abstand von einander angeordnete Abnahmeelemente 59. Jedes Abnahmeelement 59 ist als Saugelement ausgebildet und über eine Saugleitung mit einer Unterdruckquelle verbunden. Die Saugleitung verläuft innerhalb des Drehgestells 50 vom Abnahmeelement 59 durch den hohlen Längsstab 58 und den hohlen Drehstern 56 zur Hohlwelle 52 und durch die Hohlwelle 52 aus dem Drehgestell 50 hinaus. Die an den Längsstäben 58 befestigten Abnahmeelemente 59 sind als Saugnäpfe ausgebildet, die mit einem elastischen Balg versehen sind.

Die beiden beim Drehstern 56 an einem geraden Teilstück 57 des äußeren Umfanges befestigten Längsstäbe 58 sind in einer zu der Drehachse des Drehgestells 50 parallelen Referenzebene angeordnet. Die an den beiden Längsstäben 58 angebrachten, mit einem elastischen Balg versehenen Saugnäpfe sind senkrecht zu der Referenzebene angeordnet. Die beiden Längsstäbe 58 bilden zusammen einen Produkttragarm des Drehgestells 50. Das Drehgestell 50 besitzt neun solche Produkttragarme, die entlang dem Umfang des Drehgestells 50 im Abstand von einander angeordnet sind.

Die Fig. 5a bis 5c zeigen eine zweite Ausführungsform des liegend angeordneten Drehgestells der Produktabnahmevorrichtung. Die Fig. a zeigt das Drehgestell 60 in einer Schrägansicht von der Rückseite. Die Fig. 5b zeigt das Drehgestell 60 in seiner Arbeitsstellung. Die Fig. 5c zeigt die Rückseite des Drehgestells 60.

Das Drehgestell 60 ist an seiner Rückseite in einer am Ofengestell befestigten Haltevorrichtung 61 drehbar gelagert. Die Haltevorrichtung 61 ist am Ofengestell höhenverstellbar befestigt. Das Drehgestell 60 besitzt eine horizontal angeordnete Hohlwelle 62. Auf der Hohlwelle 62 sitzt der hintere Antriebsstern 63 des Drehgestells 60, der sternförmig angeordnete Arme 64 besitzt, die an ihren Endabschnitten drehbar gelagerte Antriebsrollen 65 tragen, die in die Zwischenräume zwischen den aufeinanderfolgenden Backzangen der umlaufenden Backzangenkette eingreifen.

Das Drehgestell 60 besitzt zwei stehend angeordnete, als Hohlkörper ausgebildete Drehsterne 66, deren Innenraum jeweils mit dem Hohlraum der Hohlwelle 62 verbunden ist. Der äußere Umfang der Drehsterne 66 ist als Vieleck ausgebildet. An jedem geraden Teilstück 67 des Vielecks sind jeweils zwei im Abstand von einander angeordnete Abnahmeelemente 68 angebracht, die als mit einem elastischen Balg versehene Saugnäpfe ausgebildet und über die hohlen Drehsterne 66 mit einer Unterdruckquelle verbunden sind.

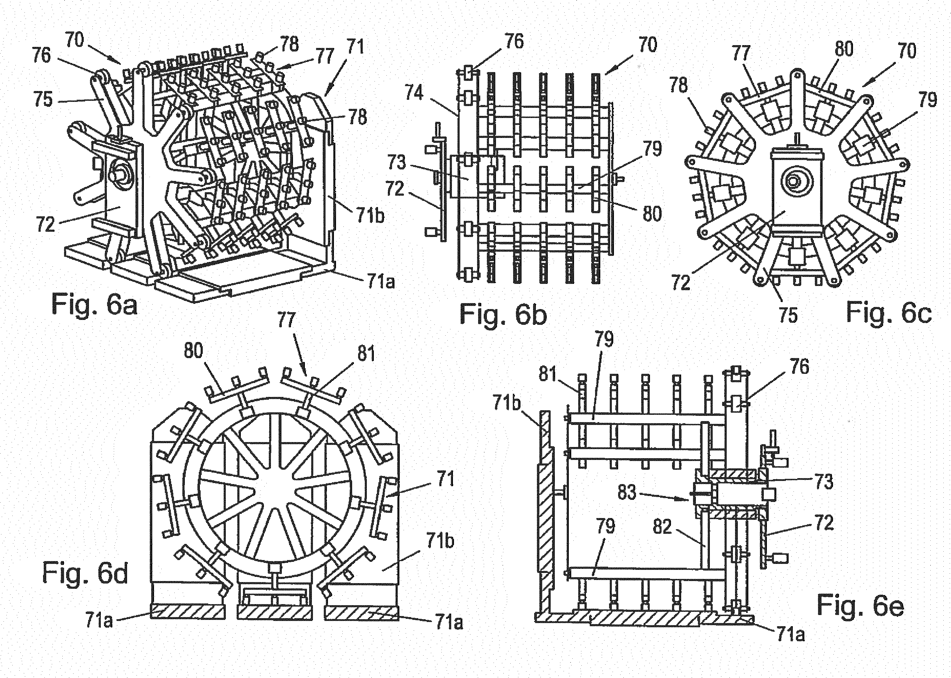

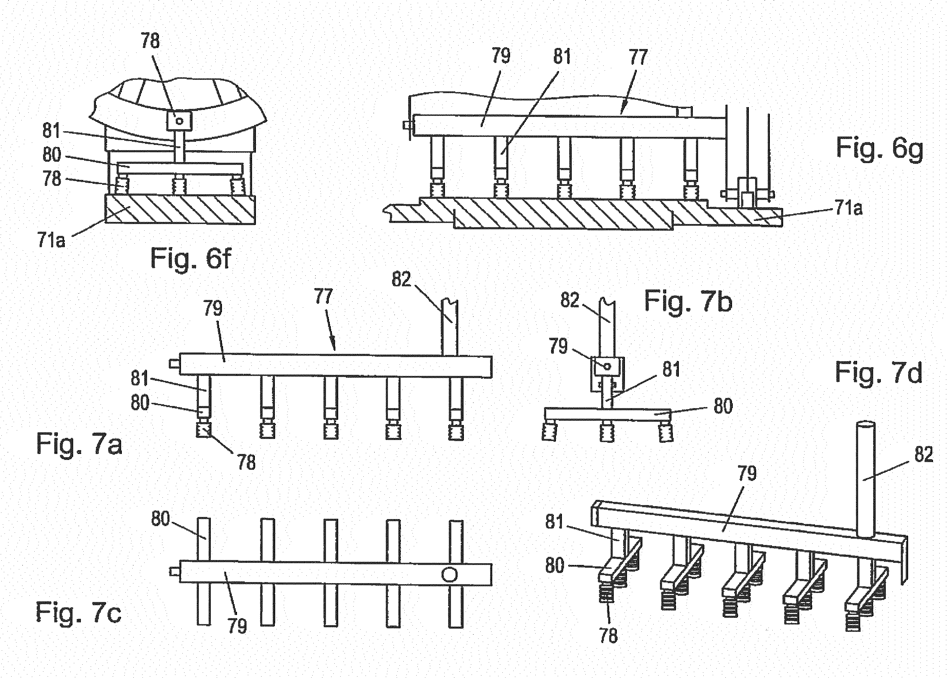

Die Fig. 6a bis 6g zeigen eine dritte Ausführungsform des liegend angeordneten Drehgestells der Produktabnahmevorrichtung. Die Fig. 6a zeigt das in die aufgeklappten Backzangen eines Backofens hineinragende Drehgestell 70 in einer Schrägansicht von der Rückseite. Die Fig. 6b zeigt das Drehgestell 70 in seiner Arbeitsstellung ohne Backzangen. Die Fig. 6c zeigt die Rückseite des Drehgestells 70. Die Fig.6d zeigt das in die aufgeklappten Backzangen eines Backofens hineinragende Drehgestell 70 in einem vertikalen Schnitt senkrecht zur Drehachse des Drehgestells 70. Fig.6e zeigt das in die aufgeklappten Backzangen eines Backofens hineinragende Drehgestell 70 in einem vertikalen Schnitt durch die Drehachse des Drehgestells 70. Die Fig.6f zeigt in einem vertikalen Schnitt einen Produkttragarm des Drehgestells 70 in einer aufgeklappten Backzange über dem Zangenunterteil der Backzange. Die Fig.6g zeigt eine Seitenansicht der Fig. 6f.

Das in Fig. 6a dargestellte Drehgestell 70 ragt in drei aufeinanderfolgende, aufgeklappte Backzangen 71 eines Backofens hinein. In Fig. 6a sind die aufgeklappten Backzangen 71 nur schematisch dargestellt. Das Drehgestell 70 ist in den aufgeklappten Backzangen 71 über den Zangenunterteilen 71a angeordnet und reicht mit seiner Vorderseite bis nahe an die hochgeklappten Zangenoberteile 71b heran. Das Drehgestell 70 ist an seiner Rückseite in einer am Ofengestell befestigten Haltevorrichtung 72 drehbar gelagert. Die Haltevorrichtung 72 ist am Ofengestell höhenverstellbar befestigt. Das Drehgestell 70 besitzt eine kurze, horizontale Hohlwelle 73. Auf der Hohlwelle 73 sitzt ein an der Rückseite des Drehgestells 70 angeordneter Antriebsstern 74, der sternförmig angeordnete Arme 75 besitzt, die an ihren Endabschnitten drehbar gelagerte Antriebsrollen 76 tragen, die in die Zwischenräume zwischen den aufeinanderfolgenden Backzangen 71 der umlaufenden Backzangenkette eingreifen.

Das Drehgestell 70 sieht seinem äußeren Umfang benachbarte Produkttragarme 77 vor, die in Umfangsrichtung des Drehgestells 70 im Abstand von einander angeordnet sind und die am äußeren Umfang des Drehgestells 70 angeordneten, jeweils als Saugelement ausgebildeten Abnahmeelemente 78 des Drehgestells 70 tragen.

Jeder Produkttragarm 77 besitzt einen zur Drehachse des Drehgestells 70 parallelen Längsstab 79. An der im Drehgestell 70 radial nach außen weisenden Seite des Längsstabes 79 sind fünf Querstäbe 80 angeordnet, die mit dem Längsstab 79 durch einen radial angeordneten Verbindungsstab 81 verbunden sind. Jeder Querstab 80 trägt an seiner im Drehgestell 70 radial nach außen weisenden Seite drei im Abstand von einander angeordnete Abnahmeelemente 78. Jedes Abnahmeelement 78 ist als ein am Querstab 80 befestigter, mit einem elastischen Balg versehener Saugnapf ausgebildet. Der Längsstab 79, die fünf Querstäbe 80 und die fünf Verbindungsstäbe 81 sind als Hohlprofile ausgebildet. Der Längsstab 79 ist durch ein nahe beim Antriebsstern 74 angeordnetes, radiales Verbindungsrohr 82 mit einem Unterdruckverteiler 83 verbunden, der am Ende der Hohlwelle 73 angeordnet ist. Der Produkttragarm 77 trägt fünfzehn, als Saugnapf ausgebildete Abnahmeelemente 78, die in einer zur Drehachse des Drehgestells 70 parallelen Ebene angeordnet sind. Die fünfzehn Saugnäpfe sind über im Produkttragarm 77 verlaufende Saugleitungen mit dem Unterdruckverteiler 83 verbunden. Die Saugleitungen verlaufen durch die hohlen Querstäbe 80 und die hohlen Verbindungsstäbe 81 zum hohlen Längsstab 79 und durch das radiale Verbindungsrohr 82 zum Unterdruckverteiler 83.

Das Drehgestell 70 besitzt neun, in Umfangsrichtung des Drehgestells 70 im Abstand von einander angeordnete Produkttragarme 77. Das Drehgestell 70 rotiert um seine horizontale Drehachse. Im Bereich des unteren Scheitels des Drehgestells 70 wird ein Produkttragarm 77 nach dem anderen mit seinen, jeweils mit einem elastischen Balg versehenen Saugnäpfen durch die Drehbewegung des Drehgestells 70 auf die gebackenen Produktstücke aufgesetzt, die auf den Zangenunterteilen 71a der aufgeklappten Backzangen 71 liegen, die den unteren Scheitels des Drehgestells 70 passieren.

Die Fig. 7a bis 7d zeigen einen Produkttragarm 77 des Drehgestells 70. Die Fig. 7a zeigt den Produkttragarm 77 von der Seite, die Fig. 7b in Stirnansicht, die Fig. 7c von oben und die Fig. 7d in einer Schrägansicht.

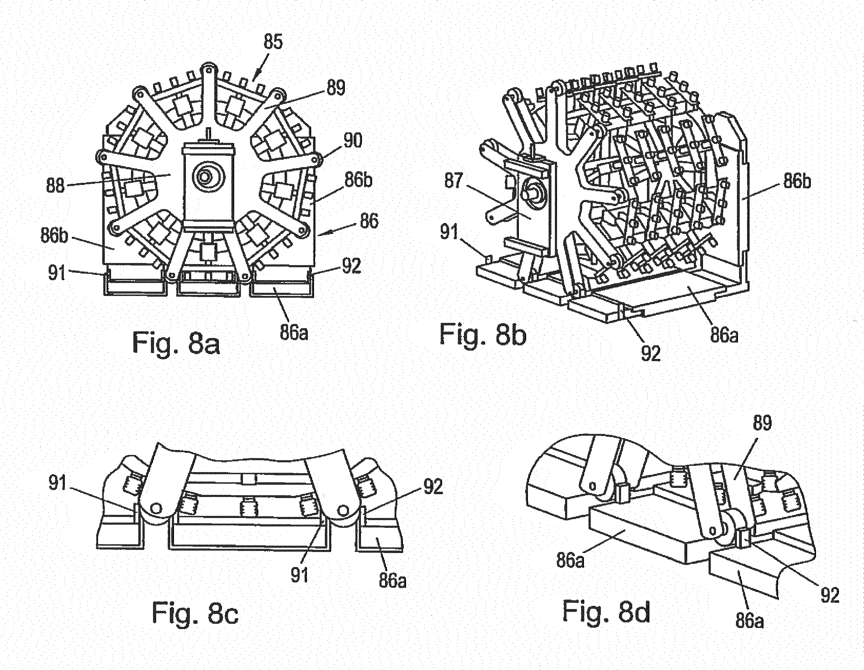

Die Fig. 8a bis 8d zeigen eine weitere Ausführungsform des Drehgestells der Produktabnahmevorrichtung im Eingriff mit einer umlaufenden Backzangenkette eines Backofens. Fig. 8a zeigt drei aufeinanderfolgende, aufgeklappte Backzangen einer Backzangenkette mit dem in die aufgeklappten Backzangen hineinragenden Drehgestell von der Rückseite. Die Fig. 8b zeigt eine Schrägansicht der Fig. 8a. Die Fig. 8c zeigt den Eingriff des Drehgestells in die Backzangenkette. Die Fig. 8d zeigt eine Schrägansicht der Fig. 8c.

Das in Fig. 8a und 8b dargestellte Drehgestell 85 ragt in drei aufeinanderfolgende, aufgeklappte Backzangen 86 einer endlosen Backzangenkette eines Backofens hinein. In den Fig. 8a und 8b sind die aufgeklappten Backzangen 86 nur schematisch dargestellt. Das Drehgestell 85 ist in den aufgeklappten Backzangen 86 über den Zangenunterteilen 86a angeordnet und reicht mit seiner Vorderseite bis nahe an die hochgeklappten Zangenoberteile 86b heran. Das Drehgestell 85 ist an seiner Rückseite in einer am Ofengestell befestigten Haltevorrichtung 87 drehbar gelagert. Die Haltevorrichtung 87 ist am Ofengestell höhenverstellbar befestigt. Das Drehgestell 85 besitzt einen an der Rückseite des Drehgestells 85 angeordneten Antriebsstern 88, der sternförmig angeordnete Arme 89 besitzt, die an ihren Endabschnitten drehbar gelagerte Antriebsrollen 90 tragen, die in Zwischenräume eingreifen, die in der Backzangenkette zwischen den Zangenunterteilen 86a der Backzangen 86 angeordnet sind. Bei den Backzangen 86 sind die Zangenunterteile 86a an den vorderen und hinteren Rändern mit über die Zangenunterteile 86a vorstehenden Leisten 91, 92 versehen, an denen die Antriebsrollen 90 des Drehgestells 85 anliegen.

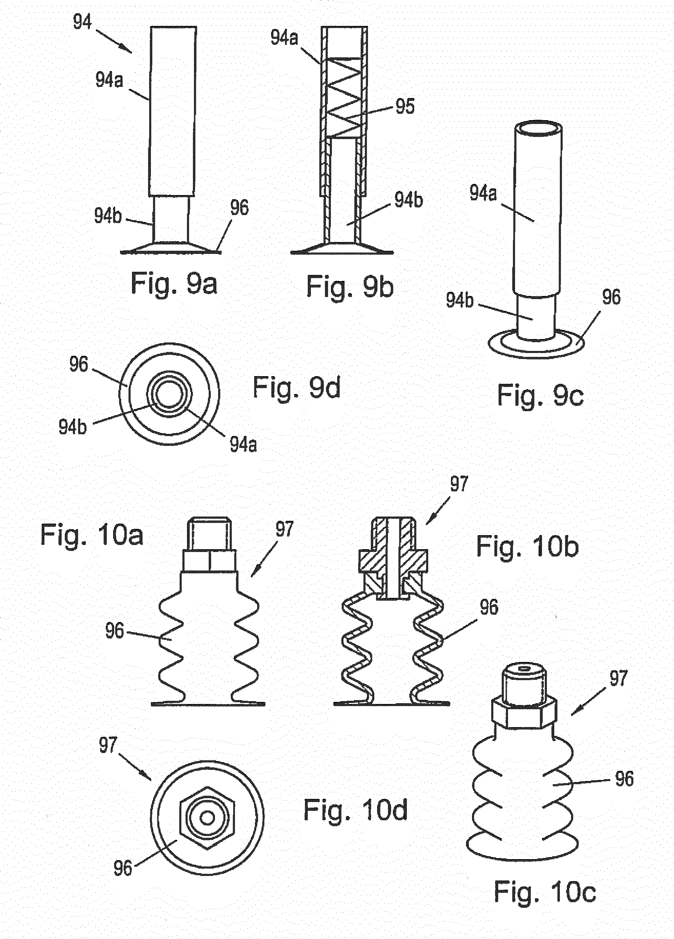

Die Fig. 9a bis 9d zeigen ein Abnahmeelement des Drehgestells, das als elastisch in sich zusammenschiebbare Saughülse ausgebildet ist. Fig. 9a zeigt die Saughülse von der Seite, Fig. 9b einen vertikalen Schnitt durch die Saughülse, Fig. 9c die Saughülse in Schrägansicht und Fig. 9d eine Draufsicht auf die Saughülse. Die Saughülse 94 besitzt zwei koaxiale, teleskopartig ineinanderschiebbare Rohrstücke 94a und 94b und eine die beiden Rohrstücke 94a und 94b auseinanderschiebende Druckfeder 95 im Inneren der Saughülse 94. Das innere Rohrstück 94b trägt einen am freien Ende der Saughülse 94 angeordneten Saugteller 96.

Die Fig. 10a bis 10d zeigen ein Abnahmeelement des Drehgestells, das als ein mit einem elastischen Balg 96 versehener Saugnapf 97 ausgebildet ist. Fig. 10a zeigt den Saugnapf von der Seite, Fig. 10b einen vertikalen Schnitt durch den Saugnapf, Fig. 10c den Saugnapf in Schrägansicht und Fig. 10d eine Draufsicht auf den Saugnapf.

## Patentansprüche

1. Backofen zum Herstellen von gebackenen Produkten, wobei der Backofen (1) einen vorderen Ofenteil (1a), einen hinteren Ofenteil (1b), ein mit einer äußeren Wärmeisolierung (1c) versehenes Ofengestell (1d), einen innerhalb der Wärmeisolierung (1c) angeordneten Backraum (2) und eine im Backofen (1) kontinuierlich umlaufende und sich durch den Backraum (2) bewegende, endlose Backzangenkette (3) besitzt, die längs einer in sich geschlossenen Umlaufbahn angeordnet ist, die sich in zwei übereinander angeordneten Transportebenen (4,5) durch beide Ofenteile (1a,1b) erstreckt, wobei die Backzangenkette (3) auf- und zuklappbare Backzangen (8) enthält, in denen aus Backformoberteilen und Backformunterteilen bestehende Backformen angeordnet sind, die durch Aufklappen der Backzangen (8) geöffnet und durch Zuklappen der Backzangen (8) geschlossen werden, wobei im vorderen Ofenteil (1a) entlang der oberen Transportebene (4) eine Einrichtung (14a) zum Aufklappen der Backzangen (8), eine Ausgabestation (15), eine Beschickungsstation (16) und eine Einrichtung (14c) zum Zuklappen der Backzangen (8) in Laufrichtung der Backzangen (8) hintereinander angeordnet sind, wobei in der Ausgabestation (15) eine die gebackenen Produkte aus den aufgeklappten Backzangen (8) entnehmende Produktabnahmevorrichtung (17) vorgesehen ist, der eine obere Transporteinrichtung für die entnommenen, gebackenen Produkte nachgeordnet ist, ***dadurch gekennzeichnet,* dass** die Produktabnahmevorrichtung ein liegend angeordnetes und um eine horizontal Drehachse drehbares Drehgestell (36, 50, 60, 70, 85) besitzt, das in die aufgeklappten Backzangen hineinragt, dass das Drehgestell (36, 50, 60, 70, 85) entlang seinem äußeren Umfang angeordnete Abnahmeelemente (59, 68, 78) trägt, die am äußeren Umfang des Drehgestells (36, 50, 60, 70, 85) in zumindest einer sich entlang dem Umfang des Drehgestells (36, 50, 60, 70, 85) erstreckenden Längsreihe hintereinander angeordnet sind, dass die Abnahmeelemente (59, 68, 78) als mit einer Unterdruckquelle verbundene Saugelemente ausgebildet sind, wobei gegebenenfalls vorgesehen ist, dass das liegend angeordnete Drehgestell (36, 50, 60, 70, 85) im vorderen Ofenteil (1a) höhenverstellbar angeordnet ist, und wobei gegebenenfalls vorgesehen ist, dass das liegend angeordnete Drehgestell (36, 50, 60, 70, 85) an seinem äußeren Umfang nach außen vorstehende Antriebsnasen besitzt, die bei der Backzangenkette in die zwischen den Backzangen angeordneten Zwischenräume der Backzangenkette eingreifen, sowie, dass das Drehgestell (50, 70) zumindest zwei Produkttragarme (58, 77) besitzt, die entlang dem Umfang des Drehgestells (50, 70) im Abstand von einander angeordnet sind, wobei jeder Produkttragarm (58, 77) zumindest ein als Saugelement ausgebildetes Abnahmeelement (59, 78) trägt.

2. Backofen nach Anspruch 1, ***dadurch gekennzeichnet,* dass** der Produkttragarm zumindest einen Stab besitzt, der zumindest zwei als Saugelement ausgebildete Abnahmeelemente trägt, die längs dem Stab im Abstand von einander angeordnet sind.

3. Backofen nach Anspruch 1, ***dadurch gekennzeichnet,* dass** der Produkttragarm (58) zumindest einen parallel zur Drehachse des Drehgestells (50) angeordneten Längsstab (58) besitzt, der zumindest ein als Saugelement ausgebildetes Abnahmeelement (59) trägt.

4. Backofen nach Anspruch 3, ***dadurch gekennzeichnet,* dass** der Längsstab (58) zumindest zwei als Saugelement ausgebildete Abnahmeelemente (59) trägt, die längs dem Längsstab (58) im Abstand von einander angeordnet sind.

5. Backofen nach Anspruch 3, ***dadurch gekennzeichnet,* dass** der Produkttragarm zumindest zwei, parallel zur Drehachse des Drehgestells (50) angeordnete Längsstäbe (58) besitzt, die in einer zur Drehachse des Drehgestells (50) parallelen Referenzebene angeordnet sind, und dass die Längsstäbe (58) als Saugelement ausgebildete Abnahmeelemente (59) tragen, die senkrecht zur Referenzebene angeordnet sind.

6. Backofen nach Anspruch 1, ***dadurch gekennzeichnet,* dass** der Produkttragarm (77) einen parallel zur Drehachse des Drehgestells (70) angeordneten Längsstab (79) besitzt, der zumindest einen quer zum Längsstab (77) angeordneten Querstab (80) trägt, der in einer zur Drehachse des Drehgestells (70) parallelen Referenzebene angeordnet ist, und dass der Querstab (80) zwei oder mehrere als Saugelement ausgebildete Abnahmeelement (78) trägt, die längs dem Querstab (80) im Abstand von einander angeordnet sind.

7. Backofen nach Anspruch 6, ***dadurch gekennzeichnet,* dass** der Längsstab (79) zwei oder mehrere im Abstand von einander angeordnete Querstäbe (80) trägt, die in einer zur Drehachse des Drehgestells (70) parallelen Referenzebene angeordnet sind, und dass jeder Querstab (8) zumindest zwei als Saugelement ausgebildete Abnahmeelemente (78) trägt, die längs dem Querstab (80) im Abstand von einander angeordnet sind und jeweils senkrecht zur Referenzebene angeordnet sind.

8. Backofen nach Anspruch 1, ***dadurch gekennzeichnet,* dass** der Produkttragarm zumindest zwei, zur Drehachse des Drehgestells parallel angeordnete Längsstäbe besitzt, die in einer zur Drehachse des Drehgestells parallelen Referenzebene angeordnet sind, und dass der Produkttragarm zumindest zwei quer zu den Längsstäben angeordnete Querstäbe besitzt, die jeweils zumindest zwei als Saugelement ausgebildete Abnahmeelemente tragen, die längs dem Querstab im Abstand von einander angeordnet sind und jeweils senkrecht zur Referenzebene angeordnet sind.

9. Backofen nach einem der Ansprüche 1-8, ***dadurch gekennzeichnet,* dass** die Produkttragarme (58, 77) als Hohlprofile ausgebildet sind und einen Teil der Saugleitungen bilden, die von den an den Produkttragarmen (58,77) angebrachten, als Saugelement ausgebildeten Abnahmeelementen (59,78) zu einer Unterdruckquelle führen.

10. Backofen nach einem der Ansprüche 1-8, ***dadurch gekennzeichnet,* dass** die am Umfang des Drehgestells (50, 70) angeordneten Abnahmeelemente (59,78) als, vorzugsweise jeweils mit einem elastischen Balg (96) versehene Saugnäpfe (97) ausgebildet sind, die an den Produkttragarmen (58,77) angebracht und über Saugleitungen mit einer Unterdruckquelle verbunden sind.

11. Backofen nach einem der Ansprüche 1-8, ***dadurch gekennzeichnet,* dass** die am Umfang des Drehgestells (50, 70) angeordneten Abnahmeelemente (59,78)als elastisch in sich zusammenschiebbare Saughülsen (94) ausgebildet sind, die an den Produkttragarmen (58,77) angebracht und über Saugleitungen mit einer Unterdruckquelle verbunden sind.

12. Backofen nach Anspruch 1, ***dadurch gekennzeichnet,* dass** das liegend angeordnete Drehgestell (60) zumindest einen stehend angeordneten Drehstern (66) besitzt, der die am Umfang des Drehgestells (60) angeordneten, als Saugelement ausgebildeten Abnahmeelemente (68) trägt, und dass das liegend angeordnete Drehgestell (60) gegebenenfalls zwei oder mehrere mit Abstand nebeneinander angeordnete Drehsterne (66) besitzt, die die am Umfang des Drehgestells (60) angeordneten, als Saugelement ausgebildeten Abnahmeelemente (68) tragen.

13. Backofen nach Anspruch 12, ***dadurch gekennzeichnet,* dass** der stehend angeordnete Drehstern (66) einen als Vieleck ausgebildeten äußeren Umfang besitzt, bei dem die als Saugelement ausgebildeten Abnahmeelemente (68) an den geraden Teilstücken (67) angeordnet sind.

14. Backofen nach Anspruch 13, ***dadurch gekennzeichnet,* dass** an den geraden Teilstücken (67) des äußeren Umfanges jeweils zumindest zwei als Saugelement ausgebildete Abnahmeelemente (68) im Abstand von einander angeordnet sind.

15. Backofen nach einem der Ansprüche 12 - 14, ***dadurch gekennzeichnet,* dass** der Drehstern (66) als Hohlkörper ausgebildet ist und einen Teil der Saugleitung bildet, die von den als Saugelement ausgebildeten Abnahmeelementen (68) zu einer Unterdruckquelle führt.

16. Backofen nach einem der Ansprüche 12 - 15, ***dadurch gekennzeichnet,* dass** die als Saugelement ausgebildeten Abnahmeelemente (68) des Drehgestells (60) als, vorzugsweise jeweils mit einem elastischen Balg (96) versehene Saugnäpfe (97) ausgebildet sind, die am äußeren Umfang eines Drehsterns (66) angebracht und über Saugleitungen mit einer Unterdruckquelle verbunden sind.

17. Backofen nach einem der Ansprüche 12 - 15, ***dadurch gekennzeichnet,* dass** die als Saugelement ausgebildeten Abnahmeelemente (68) des Drehgestells (60) als, elastisch in sich zusammenschiebbare Saughülsen (94) ausgebildet sind, die am äußeren Umfang eines Drehsterns (66) angebracht und über Saugleitungen mit einer Unterdruckquelle verbunden sind.

## Claims

1. A baking oven for producing baked products, the baking oven (1) having a front oven section (1a), a rear oven section (1b), an oven frame (1d) provided with external thermal insulation (1c), a baking chamber (2) situated inside the thermal insulation (1c), and an endless baking tong chain (3) that circulates continuously in the baking oven (1) and moves through the baking chamber (2), the baking tong chain being situated in a closed circulating path that extends through the two oven sections (1a, 1b) in two transport levels (4, 5) situated one above the other, wherein the baking tong chain (3) contains openable and closable baking tongs (8) in which baking molds made up of baking mold upper parts and baking mold lower parts are situated, which are opened by opening the baking tongs (8) and closed by closing the baking tongs (8), wherein a device (14a) for opening the baking tongs (8), a dispensing station (15), a loading station (16), and a device (14c) for closing the baking tongs (8) are arranged in succession in the running direction of the baking tongs (8) in the front oven section (1a) along the upper transport level (4), wherein a product removal apparatus (17) that removes the baked products from the opened baking tongs (8) is provided in the dispensing station (15), followed by an upper transport device for the removed baked products, **characterized in that** the product removal apparatus has a horizontal rotating frame (36, 50, 60, 70, 85) that is rotatable about a horizontal rotational axis and that protrudes into the opened baking tongs, and the rotating frame (36, 50, 60, 70, 85) bears removal elements (59, 68, 78) situated along its outer circumference, which are situated along the outer circumference of the rotating frame (36, 50, 60, 70, 85) in at least one longitudinal row that extends along the circumference of the rotating frame (36, 50, 60, 70, 85), the removal elements (59, 68, 78) are designed as suction elements that are connected to a negative pressure source, it being optionally provided that the horizontal rotating frame (36, 50, 60, 70, 85) is situated in a height-adjustable manner in the front oven section (1a), and it being optionally provided that the horizontal rotating frame (36, 50, 60, 70, 85) on its outer circumference has outwardly protruding drive lugs which in the baking tong chain engage with the intermediate spaces in the baking tong chain situated between the baking tongs, and the rotating frame (50, 70) has at least two product carrying arms (58, 77) situated along the circumference of the rotating frame (50, 70) at a distance from one another, wherein each product carrying arm (58, 77) bears at least one removal element (59, 78) designed as a suction element.

2. The baking oven according to Claim 1, **characterized in that** the product carrying arm has at least one rod that bears at least two removal elements that are designed as suction elements and that are situated along the rod at a distance from one another.

3. The baking oven according to Claim 1, **characterized in that** the product carrying arm (58) has at least one longitudinal rod (58) that is situated parallel to the rotational axis of the rotating frame (50) and that bears at least one removal element (59) designed as a suction element.

4. The baking oven according to Claim 3, **characterized in that** the longitudinal rod (58) bears at least two removal elements (59) that are designed as suction elements and situated along the longitudinal rod (58) at a distance from one another.

5. The baking oven according to Claim 3, **characterized in that** the product carrying arm has at least two longitudinal rods (58) that are situated parallel to the rotational axis of the rotating frame (50) and that are situated in a reference plane parallel to the rotational axis of the rotating frame (50), and the longitudinal rods (58) bear removal elements (59) that are designed as suction elements and situated perpendicular to the reference plane.

6. The baking oven according to Claim 1, **characterized in that** the product carrying arm (77) has a longitudinal rod (79) that is situated parallel to the rotational axis of the rotating frame (70) and that bears at least one transverse rod (80) that is transverse to the longitudinal rod (77) and situated in a reference plane parallel to the rotational axis of the rotating frame (70), and the transverse rod (80) bears two or more removal elements (78) that are designed as suction elements and situated along the transverse rod (80) at a distance from one another.

7. The baking oven according to Claim 6, **characterized in that** the longitudinal rod (79) bears two or more transverse rods (80) that are situated at a distance from one another and situated in a reference plane parallel to the rotational axis of the rotating frame (70), and each transverse rod (8) bears at least two removal elements (78) that are designed as suction elements and situated along the transverse rod (80) at a distance from one another, in each case perpendicular to the reference plane.

8. The baking oven according to Claim 1, **characterized in that** the product carrying arm has at least two longitudinal rods that are situated parallel to the rotational axis of the rotating frame, in a reference plane parallel to the rotational axis of the rotating frame, and the product carrying arm has at least two transverse rods transverse to the longitudinal rods, and which each bear at least two removal elements that are designed as suction elements and situated along the transverse rod at a distance from one another, in each case perpendicular to the reference plane.

9. The baking oven according to one of Claims 1 to 8, **characterized in that** the product carrying arms (58, 77) are designed as hollow profiles and form a portion of the suction lines that lead from the removal elements (59, 78), designed as suction elements and mounted on the product carrying arms (58, 77), to a negative pressure source.

10. The baking oven according to one of Claims 1 to 8, **characterized in that** the removal elements (59, 78) situated on the circumference of the rotating frame (50, 70) are designed as suction cups (97) that are preferably in each case provided with an elastic bellows (96), the suction cups being mounted on the product carrying arms (58, 77) and connected to a negative pressure source via suction lines.

11. The baking oven according to one of Claims 1 to 8, **characterized in that** the removal elements (59, 78) situated on the circumference of the rotating frame (50, 70) are designed as suction sleeves (94) that can be elastically pushed into one another, the suction sleeves being mounted on the product carrying arms (58, 77) and connected to a negative pressure source via suction lines.

12. The baking oven according to Claim 1, **characterized in that** the horizontal rotating frame (60) has at least one vertical starwheel (66) that bears the removal elements (68), designed as suction elements, on the circumference of the rotating frame (60), and the horizontal rotating frame (60) optionally has two or more adjacent starwheels (66) that are situated at a distance from one another and bear the removal elements (68), designed as suction elements, on the circumference of the rotating frame (60).

13. The baking oven according to Claim 12, **characterized in that** the vertical starwheel (66) has an outer circumference designed as a polygon, wherein the removal elements (68) designed as suction elements are situated on the straight segments (67).

14. The baking oven according to Claim 13, **characterized in that** in each case at least two removal elements (68), designed as suction elements, are situated at a distance from one another on the straight segments (67) of the outer circumference.

15. The baking oven according to one of Claims 12 to 14, **characterized in that** the starwheel (66) is designed as a hollow body and forms part of the suction line that leads from the removal elements (68), designed as suction elements, to a negative pressure source.

16. The baking oven according to one of Claims 12 to 15, **characterized in that** the removal elements (68) of the rotating frame (60) that are designed as suction elements are designed as suction cups (97) that are preferably in each case provided with an elastic bellows (96), the suction cups being mounted on the outer circumference of a starwheel (66) and connected to a negative pressure source via suction lines.

17. The baking oven according to one of Claims 12 to 15, **characterized in that** the removal elements (68) of the rotating frame (60) that are designed as suction elements are designed as suction sleeves (94) that can be elastically pushed into one another, the suction sleeves being mounted on the outer circumference of a starwheel (66) and connected to a negative pressure source via suction lines.

## Revendications

1. Four de cuisson destiné à la fabrication de produits cuits, le four de cuisson (1) comportant une partie de four avant (la), une partie de four arrière (1b), un cadre de four (1d) pourvu d'une isolation thermique extérieure (1c), une chambre de cuisson (2) disposée à l'intérieur de l'isolation thermique (1c) et une chaîne de pinces de cuisson sans fin (3) qui circule de manière continue dans le four de cuisson (1) et se déplace à travers la chambre de cuisson (2), ladite chaîne étant située le long d'une trajectoire fermée qui s'étend à travers les deux parties de four (1a, 1b) dans deux plans de transport (4, 5) disposés l'un au dessus de l'autre, la chaîne de pinces de cuisson (3) comportant des pinces de cuisson (8) qui peuvent être ouvertes et fermées et dans lesquelles sont disposés des moules de cuisson composés de parties de moule de cuisson supérieures et de parties de moule de cuisson inférieures et qui sont ouverts par ouverture des pinces de cuisson (8) et fermés par fermeture des pinces de cuisson (8), un moyen (14a) d'ouverture des pinces de cuisson (8), un poste de distribution (15), un poste de chargement (16) et un moyen (14c) de fermeture des pinces de cuisson (8) étant disposés successivement dans la direction de circulation des pinces de cuisson (8) dans la partie de four avant (la) le long du plan de transport supérieur (4), un dispositif de retrait de produit (17) qui retire les produits cuits des pinces de cuisson ouvertes (8) étant prévu dans le poste de distribution (15), un moyen de transport supérieur destiné aux produits cuits retirés étant disposé en aval du dispositif de retrait de produit, **caractérisé en ce que** le dispositif de retrait de produits comporte un cadre rotatif (36, 50, 60, 70, 85,) qui est disposé horizontalement, qui peut tourner sur un axe de rotation horizontal et qui fait saillie dans les pinces de cuisson ouvertes, **en ce que** le cadre rotatif (36, 50, 60, 70, 85) porte des éléments de retrait (59, 68, 78) qui sont placés le long de sa périphérie extérieure et qui sont disposés les uns derrière les autres à la périphérie extérieure du cadre rotatif (36, 50, 60, 70, 85) suivant au moins une rangée longitudinale s'étendant le long de la périphérie du cadre rotatif (36, 50, 60, 70, 85), **en ce que** les éléments de retrait (59, 68, 78) sont conçus comme des éléments d'aspiration reliés à une source de pression négative, le cadre rotatif (36, 50, 60, 70, 85) disposé horizontalement étant éventuellement prévu pour être réglable en hauteur dans la partie de four avant (la), et le cadre rotatif (36, 50, 60, 70, 85) disposé horizontalement étant éventuellement prévu pour comporter sur sa périphérie extérieure des ergots d'entraînement qui font saillie vers l'extérieur et qui s'engagent, dans la chaîne de pinces de cuisson, dans les espaces intermédiaires de la chaîne de pinces de cuisson disposés entre les pinces de cuisson, et **en ce que** le cadre rotatif (50, 70) comporte au moins deux bras de support de produit (58, 77) qui sont disposés à distance les uns des autres le long de la périphérie du cadre rotatif (50, 70), chaque bras de support de produit (58, 77) supportant au moins un élément de retrait (59, 78) conçu comme un élément d'aspiration.

2. Four de cuisson selon la revendication 1, **caractérisé en ce que** le bras de support de produit comporte au moins une barre qui supporte au moins deux éléments de retrait qui sont conçus comme des éléments d'aspiration et qui sont disposés à distance les uns des autres le long de la barre.

3. Four de cuisson selon la revendication 1, **caractérisé en ce que** le bras de support de produit (58) comporte au moins une barre longitudinale (58) qui est disposée parallèlement à l'axe de rotation du cadre rotatif (50) et qui supporte au moins un élément de retrait (59) conçu comme un élément d'aspiration.

4. Four de cuisson selon la revendication 3, **caractérisé en ce que** la barre longitudinale (58) supporte au moins deux éléments de retrait (59) qui sont conçus comme des éléments d'aspiration et qui sont disposés à distance les uns des autres le long de la barre longitudinale (58).

5. Four de cuisson selon la revendication 3, **caractérisé en ce que** le bras de support de produit comporte au moins deux barres longitudinales (58) qui sont disposées parallèlement à l'axe de rotation du cadre rotatif (50) et qui sont disposées dans un plan de référence parallèle à l'axe de rotation du cadre rotatif (50), et **en ce que** les barres longitudinales (58) supportent des éléments de retrait (59) qui sont conçus comme des éléments d'aspiration et qui sont disposés perpendiculairement au plan de référence.

6. Four de cuisson selon la revendication 1, **caractérisé en ce que** le bras de support de produit (77) comporte une barre longitudinale (79) disposée parallèlement à l'axe de rotation du cadre rotatif (70) et supportant au moins une barre transversale (80) disposée transversalement à la barre longitudinale (77) et disposée dans un plan de référence parallèle à l'axe de rotation du cadre rotatif (70), et **en ce que** la barre transversale (80) supporte au moins deux éléments de retrait (78) conçus comme des éléments d'aspiration et situés à distance les uns des autres le long de la barre transversale (80).

7. Four de cuisson selon la revendication 6, **caractérisé en ce que** la barre longitudinale (79) supporte au moins deux barres transversales (80) disposées à distance les unes des autres et disposées dans un plan de référence parallèle à l'axe de rotation du cadre rotatif (70), et **en ce que** chaque barre transversale (8) supporte au moins deux éléments de retrait (78) conçus comme des éléments d'aspiration et disposés à distance les uns des autres le long de la barre transversale (80) et chacun perpendiculairement au plan de référence.

8. Four de cuisson selon la revendication 1, **caractérisé en ce que** le bras de support de produit comporte au moins deux barres longitudinales disposées parallèlement à l'axe de rotation du cadre rotatif et disposées dans un plan de référence parallèle à l'axe de rotation du cadre rotatif, et **en ce que** le bras de support de produit comporte au moins deux barres transversales disposées transversalement aux barres longitudinales et supportant chacune au moins deux éléments de retrait conçus comme des éléments d'aspiration et disposés à distance les uns des autres le long de la barre transversale et chacun perpendiculairement au plan de référence.

9. Four de cuisson selon l'une des revendications 1 à 8, **caractérisé en ce que** les bras de support de produit (58, 77) sont conçus comme des profilés creux et forment une partie des conduits d'aspiration qui vont des éléments de retrait (59, 78), conçus comme des éléments d'aspiration et montés sur les bras de support de produit (58, 77), à une source de pression négative.

10. Four de cuisson selon l'une des revendications 1 à 8, **caractérisé en ce que** les éléments de retrait (59, 78), disposés à la périphérie du cadre rotatif (50, 70), sont conçus comme des ventouses (97) qui sont de préférence pourvues chacune d'un soufflet élastique (96) et qui sont montées sur les bras de support de produit (58, 77) et reliées à une source de pression négative par le biais de conduits d'aspiration.

11. Four de cuisson selon l'une des revendications 1 à 8, **caractérisé en ce que** les éléments de retrait (59, 78), disposés à la périphérie du cadre rotatif (50, 70), sont conçus comme des manchons d'aspiration (94) qui sont télescopiques élastiquement et qui sont montés sur les bras de support de produit (58, 77) et reliés à une source de pression négative par le biais de conduits d'aspiration.

12. Four de cuisson selon la revendication 1, **caractérisé en ce que** le cadre rotatif horizontal (60) comporte au moins une roue étoilée (66) disposée verticalement et supportant les éléments de retrait (68) conçus comme des éléments d'aspiration et disposés à la périphérie du cadre rotatif (60), et **en ce que** le cadre rotatif horizontal (60) comporte éventuellement deux ou plusieurs roues étoilées (66) disposées à distance les unes à côté des autres et supportant les éléments de retrait (68) conçus comme des éléments d'aspiration et disposés à la périphérie du cadre rotatif (60).

13. Four de cuisson selon la revendication 12, **caractérisé en ce que** la roue étoilée verticale (66) présente une périphérie extérieure qui est conçue sous la forme d'un polygone et au niveau de laquelle les éléments de retrait (68), conçus comme des éléments d'aspiration, sont situés sur les segments rectilignes (67).

14. Four de cuisson selon la revendication 13, **caractérisé en ce qu'**au moins deux éléments de retrait (68), conçus comme des éléments d'aspiration, sont disposés à distance les uns des autres sur les segments rectilignes (67) de la périphérie extérieure.

15. Four de cuisson selon l'une des revendications 12 à 14, **caractérisé en ce que** la roue étoilée (66) est conçue comme un corps creux et forme une partie du conduit d'aspiration qui va des éléments de retrait (68), conçue comme des éléments d'aspiration, à une source de pression négative.

16. Four de cuisson selon l'une des revendications 12 à 15, **caractérisé en ce que** les éléments de retrait (68) du cadre rotatif (60), conçus comme des éléments d'aspiration, sont conçus comme des ventouses (97) qui sont de préférence pourvues chacune d'un soufflet élastique (96) et qui sont montées sur la périphérie extérieure d'une roue étoilée (66) et reliées à une source de pression négative par le biais de conduits d'aspiration.

17. Four de cuisson selon l'une des revendications 12 à 15, **caractérisé en ce que** les éléments de retrait (68), conçus comme des éléments d'aspiration, du cadre rotatif (60) sont conçus comme des manchons d'aspiration (94) qui sont télescopiques élastiquement et qui sont montés sur la périphérie extérieure d'une roue étoilée (66) et reliés à une source de pression négative par le biais de conduits d'aspiration.
